# EUROPÄISCHE PATENTSCHRIFT

(11) **EP 3 154 836 B1**
(45) Veröffentlichungstag und Bekanntmachung des Hinweises auf die Patenterteilung: **14.03.2018**
(21) Anmeldenummer: 15729080.0
(22) Anmeldetag: 09.06.2015
(51) Int. Cl.: B60W 30/18, B60W 50/08, B60W 50/12, F16H 63/46, F16D 48/06

(54) **VERFAHREN ZUM BETREIBEN EINER GETRIEBEEINRICHTUNG FÜR EIN KRAFTFAHRZEUG SOWIE ENTSPRECHENDE GETRIEBEEINRICHTUNG**
METHOD FOR OPERATING A TRANSMISSION DEVICE FOR A MOTOR VEHICLE, AND CORRESPONDING TRANSMISSION DEVICE
PROCÉDÉ POUR FAIRE FONCTIONNER UN DISPOSITIF DE TRANSMISSION DESTINÉ À UN VÉHICULE AUTOMOBILE ET DISPOSITIF DE TRANSMISSION ASSOCIÉ

(30) Priorität: 14.06.2014 DE 102014008672
(43) Veröffentlichungstag der Anmeldung: 19.04.2017
(73) Patentinhaber: Audi AG, 85045 Ingolstadt (DE)
(72) Erfinder: SCHIERGL, Andreas, 84069 Schierling (DE)
(74) Vertreter: Lehle, Josef
(86) Internationale Anmeldenummer: PCT/EP2015/001153
(87) Internationale Veröffentlichungsnummer: WO 2015/188928

(56) Entgegenhaltungen:
- EP-A2- 0 727 597
- DE-A1- 10 221 701
- DE-A1-102008 042 959
- DE-A1-102012 208 996
- FR-A1- 2 999 135

## Beschreibung

Die Erfindung betrifft ein Verfahren zum Betreiben einer Getriebeeinrichtung für ein Kraftfahrzeug, wobei die Getriebeeinrichtung eine automatische Kupplung und ein manuelles Schaltgetriebe aufweist. Die Erfindung betrifft weiterhin eine Getriebeeinrichtung.

Die Getriebeeinrichtung dient vorzugsweise einer Drehmomentübertragung innerhalb eines Antriebsstrangs des Kraftfahrzeugs. Die Getriebeeinrichtung ist insoweit beispielsweise zwischen einer Antriebseinrichtung des Kraftfahrzeugs und wenigstens einer angetriebenen Achse des Kraftfahrzeugs angeordnet. Die Antriebseinrichtung weist wenigstens ein Antriebsaggregat auf, beispielsweise eine Brennkraftmaschine oder eine elektrische Maschine. Die Antriebseinrichtung kann jedoch auch als Hybridantriebseinrichtung ausgestaltet sein und insoweit wenigstens zwei Antriebsaggregate aufweisen, welche vorzugsweise voneinander verschieden sind. Beispielsweise sind im Rahmen der Hybridantriebseinrichtung als Antriebsaggregate eine Brennkraftmaschine sowie eine elektrische Maschine vorgesehen.

Die Getriebeeinrichtung weist die automatische Kupplung und das manuelle Schaltgetriebe auf. Die Kupplung liegt dabei insbesondere in einer Wirkverbindung zwischen der Antriebseinrichtung und dem Schaltgetriebe vor, ist also insoweit an eine Eingangswelle des Schaltgetriebes angeschlossen beziehungsweise mit dieser wirkverbunden, insbesondere starr und/oder permanent. Eine Ausgangswelle des Schaltgetriebes ist bevorzugt mit der wenigstens einen angetriebenen Achse des Kraftfahrzeugs wirkverbunden, insbesondere ebenfalls starr und/oder permanent. Das bedeutet, dass die Drehzahl der Ausgangswelle unmittelbar von einer Fahrgeschwindigkeit des Kraftfahrzeugs abhängt und umgekehrt.

Die Kupplung dient zum, insbesondere wahlfreien, Herstellen oder Unterbrechen der Wirkverbindung zwischen der Antriebseinrichtung und dem Schaltgetriebe. Bei wenigstens teilweise, insbesondere vollständig, geschlossener Kupplung wird insoweit ein von der Antriebseinrichtung bereitgestelltes Drehmoment an das Schaltgetriebe übertragen. Ist die Kupplung dagegen geöffnet, insbesondere vollständig geöffnet, so ist die Wirkverbindung unterbrochen. Mithin wird kein Drehmoment von der Antriebseinrichtung zu der Getriebeeinrichtung beziehungsweise umgekehrt übertragen. Die Kupplung ist als automatische Kupplung ausgestaltet, wird also mittels einer automatischen Stelleinrichtung betätigt. Das bedeutet, dass der Kupplung ein Aktuator, insbesondere ein elektrischer Aktuator, zugeordnet ist, welcher die Kupplung betätigt.

Ein Ansteuern des Aktuators und mithin der Kupplung erfolgt beispielsweise in Abhängigkeit von einer Kupplungspedalstellung und/oder von einem Vorgabewert in einem Steuergerät. Die Kupplung kann insoweit sowohl von einem Fahrer des Kraftfahrzeugs - mittels des Kupplungspedals - als auch von einem Steuergerät des Kraftfahrzeugs beziehungsweise der Antriebseinrichtung angesteuert werden. Die Kupplung ist lediglich elektrisch, nicht jedoch mechanisch mit dem Kupplungspedal gekoppelt. Selbstverständlich kann anstelle des Kupplungspedals ein beliebiges Kupplungsbedienelement vorgesehen sein. Das Schaltgetriebe ist als manuelles Schaltgetriebe ausgeführt. Ihm ist insoweit ein Bedienelement, beispielsweise ein Schalthebel, zugeordnet, über welchen der Fahrer des Kraftfahrzeugs das Schaltgetriebe betätigen, beispielsweise einen gewünschten Fahrgang einstellen kann.

Aus dem Stand der Technik ist beispielsweise die Druckschrift DE 102 21 701 A1 bekannt. Diese betrifft ein Steuerverfahren für Kraftfahrzeuge mit automatisierter Kupp-Iungsvorrichtung, mit einem ansteuerbaren Motor mit einer Motorsteuerungsvorrichtung, vorzugsweise einem ansteuerbaren automatisierten Getriebe und zumindest einer elektronischen Steuereinrichtung zum Ansteuern des Getriebes und der Kupplungsvorrichtung. Dabei ist vorgesehen, dass bei einer Bremsenbetätigung und/oder einer Betätigung des Kraftstoffbemessungsglieds die Kupplung geschlossen wird, wobei vor dem Schließen der Kupplung zur Beendigung eines Segelmodus die Drehzahl der Antriebswelle des Getriebes oder eine entsprechende diese Drehzahl repräsentierende Größe detektiert wird und die Motordrehzahl so geregelt wird, dass die beiden Drehzahlen übereinstimmen beziehungsweise einander angeglichen werden.

Weiterhin zeigt die Druckschrift DE 10 2012 208 996 A1 ein Verfahren und eine Vorrichtung zur Steuerung des Einrückens einer Kupplung eines Kraftfahrzeugs, bei dem beziehungsweise bei der, wenn ein Übersetzungsverhältnis eines Handschaltgetriebes, das für das Einrücken gewählt ist, aktuell ungeeignet ist, das Einrücken der Kupplung blockiert wird.

Es ist nun Aufgabe der Erfindung, ein Verfahren zum Betreiben einer Getriebeeinrichtung vorzugschlagen, welches gegenüber bekannten Verfahren Vorteile aufweist, insbesondere ein zuverlässigeres Bedienen der Getriebeeinrichtung ermöglicht.

Dies wird erfindungsgemäß mit einem Verfahren mit den Merkmalen des Anspruchs 1 erzielt. Dabei ist vorgesehen, dass in zumindest einer Betriebsart die Getriebeeinrichtung die Kupplung vor einem Einlegen oder Auslegen eines Fahrgangs an dem Schaltgetriebe geschlossen und nach dem Schließen nach einer bestimmten Zeitspanne wieder geöffnet wird, wenn bei wenigstens teilweise geöffneter Kupplung auf ein Betätigen des Schaltgetriebes erkannt wird, sodass das Einlegen oder Auslegen des Fahrgangs verhindert wird. Die wenigstens eine Betriebsart ist vorzugsweise eine Betriebsart, in welcher die Kupplung zumindest zeitweise geöffnet, insbesondere vollständig geöffnet, ist. An dem Schaltgetriebe kann dabei ein Fahrgang eingestellt sein, insbesondere ein Vorwärtsgang oder ein Rückwärtsgang. Jedoch kann auch eine Leerlaufstellung beziehungsweise Neutralstellung vorliegen. Vorzugsweise sind als Fahrgänge des Schaltgetriebes mehrere Vorwärtsgänge und ein Rückwärtsgang, insbesondere genau ein Rückwärtsgang, realisiert.

In einer Normalbetriebsart der Getriebeeinrichtung, in welcher ein von der Antriebseinrichtung erzeugtes Drehmoment zum Antreiben des Kraftfahrzeugs verwendet werden soll, wird zum Durchführen eines Gangwechsel die Kupplung geöffnet, anschließend der gewünschte Fahrgang eingelegt und nachfolgend die Kupplung wieder geschlossen, um die Wirkverbindung zwischen der Antriebseinrichtung und der wenigstens einen angetriebenen Achse des Kraftfahrzeugs herzustellen. Ist an dem Schaltgetriebe bereits ein Fahrgang eingelegt, welcher nicht dem gewünschten Fahrgang entspricht, so wird nach dem Öffnen der Kupplung zunächst der vorherige Fahrgang ausgelegt und erst anschließend der gewünschte Fahrgang eingelegt. Nachfolgend wird, wie beschrieben, die Kupplung geschlossen.

Im Gegensatz dazu soll nun unter bestimmten Bedingungen die Kupplung bereits geschlossen werden, bevor ein Fahrgang eingelegt wird. Selbstverständlich kann es auch vorgesehen sein, unter denselben Bedingungen die Kupplung bereits zu schließen, bevor ein Fahrgang ausgelegt wird, bevor also überhaupt tatsächlich ein Betätigen des Schaltgetriebes erfolgt.

Das Schließen der Kupplung vor dem Einlegen und/oder Auslegen des Fahrgangs soll erfolgen, wenn bei wenigstens teilweise geöffneter Kupplung auf ein Betätigen des Schaltgetriebes erkannt wird. Wie bereits erläutert, kann in der Betriebsart ein möglichst durchgehendes Öffnen der Kupplung vorgesehen sein. Bevorzugt wird in der Betriebsart ein Segeln des Kraftfahrzeugs realisiert, sodass die Betriebsart als Segelbetriebsart vorliegt. Wie jedoch eingangs bereits erläutert, hängt die Drehzahl der Ausgangswelle des Schaltgetriebes von der momentanen Fahrgeschwindigkeit des Kraftfahrzeugs ab. Weil bei wenigstens teilweise geöffneter Kupplung, insbesondere vollständig geöffneter Kupplung, das Betätigen des Schaltgetriebes, also das Auslegen oder das Einlegen eines Fahrgangs, lediglich einen geringen Kraftaufwand erfordert, kann es zu einem unbeabsichtigten Betätigen des Schaltgetriebes kommen, beispielsweise wenn der Fahrer des Kraftfahrzeugs gegen den Schalthebel stößt. Eine solche Betätigung kann auch in einer absichtlichen, beispielsweise missbräuchlichen, Betätigung des Schalthebels liegen.

Wird nun ein Fahrgang eingelegt, so wird die Ausgangswelle des Schaltgetriebes über eine mit dem Fahrgang korrespondierende Übersetzung mit der Eingangswelle des Schaltgetriebes wirkverbunden. Entsprechend wird die Eingangswelle auf eine Drehzahl gebracht, welche sich aus der Drehzahl der Ausgangswelle und der Übersetzung des Fahrgangs bestimmt. Ist die Übersetzung zu hoch, wird die Drehzahl der Eingangswelle sehr groß. Im Extremfall wird die Drehzahl der Eingangswelle größer als eine maximal zulässige Drehzahl. In diesem Fall kann es zu einer Beschädigung kommen, beispielsweise zu einem Bersten einer mit der Eingangswelle wirkverbundenen Kupplungsscheibe.

Um dies zu verhindern, wird die Kupplung wenigstens teilweise, insbesondere vollständig, geschlossen, sobald auf das Betätigen des Schaltgetriebes erkannt wird. Ist die Kupplung wenigstens teilweise geschlossen, ist die Betätigung des Schaltgetriebes, also das Auslegen oder Einlegen des Fahrgangs, deutlich erschwert, insbesondere wegen der dann vorliegenden Hinterschneidung der Kupplungsverzahnungen. Ein unbeabsichtigtes Betätigen des Schaltgetriebes, insbesondere über den Schalthebel, durch den Fahrer oder auf andere Art und Weise wird folglich mit der beschriebenen Vorgehensweise verhindert oder zumindest erschwert.

Schließlich ist vorgesehen, dass die Kupplung nach dem Schließen nach einer bestimmten Zeitspanne wieder geöffnet wird. Auch dies ist bevorzugt der Fall, falls als Betriebsart die Segelbetriebsart vorliegt. Die Kupplung wird also vorzugsweise nur während der bestimmten Zeitspanne geschlossen. Die Zeitspanne ist dabei beispielsweise derart bemessen, dass sie das Betätigen des Schaltgetriebes verhindert, insbesondere das Auslegen oder Einlegen des Fahrgangs. Die bestimmte Zeitspanne kann dabei, um ein sanftes Einkuppeln und/oder Auskuppeln zu realisieren, abhängig von der Fahrgeschwindigkeit des Kraftfahrzeugs beziehungsweise der Drehzahl der Eingangswelle festgelegt werden. Bei größeren Fahrgeschwindigkeiten beziehungsweise größeren Drehzahlen der Eingangswelle wird mithin die Zeitspanne länger gewählt als bei geringeren Fahrgeschwindigkeiten beziehungsweise niedrigeren Drehzahlen.

In einer weiteren Ausgestaltung der Erfindung ist vorgesehen, dass das Betätigen ein Auslegen oder ein Einlegen eines Fahrgangs des Schaltgetriebes ist. Auf eine derartige Vorgehensweise wurde bereits vorstehend eingegangen. Besondere vorteilhaft wird bereits das Auslegen eines Fahrgangs verhindert, zumindest jedoch muss das Einlegen eines Fahrgangs unterbunden werden. Beispielsweise ist es möglich, grundsätzlich das Einlegen jeglichen Fahrgangs nicht zuzulassen. Selbstverständlich kann jedoch auch selektiv lediglich wenigstens ein Fahrgang nicht zugelassen werden, beispielsweise weil dieser eine zu hohe Übersetzung aufweist.

Ein Weiterbildung der Erfindung sieht vor, dass die Kupplung nur dann geschlossen wird, wenn auf das Einlegen eines Fahrgangs erkannt wird, der eine Übersetzung aufweist, die größer ist als eine Maximalübersetzung. Auch hierauf wurde bereits hingewiesen. Verhindert werden soll insbesondere das Auftreten einer Drehzahl der Eingangswelle des Schaltgetriebes, welche zu groß ist, also beispielsweis über einer- maximal Eingangswellendrehzahl liegt.

Eine bevorzugte weitere Ausgestaltung der Erfindung sieht vor, dass die Maximalübersetzung aus einer Ausgangswellendrehzahl und einer Maximaleingangswellendrehzahl des Schaltgetriebes bestimmt wird. Die Ausgangswellendrehzahl hängt wie erwähnt unmittelbar von der Fahrgeschwindigkeit des Kraftfahrzeugs ab, weil die Ausgangswelle des Schaltgetriebes vorzugsweise starr und/oder permanent mit der wenigstens einen angetriebenen Achse des Kraftfahrzeugs wirkverbunden ist. Ebenso ist die Maximaleingangswellendrehzahl bekannt, welche die größte zulässige Drehzahl der Eingangswelle darstellt. Aus diesen beiden Größen wird nun die Maximalübersetzung ermittelt, welche der einzulegenden Fahrgang nicht überschreiten darf, um die Drehzahlgrenze für die Eingangswelle des Schaltgetriebes einzuhalten.

Zusätzlich oder alternativ kann vorgesehen sein, dass das Schließen der Kupplung nur durchgeführt wird, wenn die Ausgangswellendrehzahl größer als eine Grenzdrehzahl ist. Bei geringen Fahrgeschwindigkeiten des Kraftfahrzeugs soll die Kupplung also nicht geschlossen werden, weil davon ausgegangen werden kann, dass bei diesen ohnehin keine Drehzahl der Eingangswelle auftreten kann, welche die Maximaleingangswellendrehzahl überschreitet. Insbesondere wird die zumindest eine Betriebsart nicht eingeleitet, wenn die Ausgangswellendrehzahl kleiner als die Grenzdrehzahl ist. Entsprechend wird die Betriebsart nur dann durchgeführt, wenn die Ausgangswellendrehzahl die Grenzdrehzahl überschreitet.

Eine weitere Ausgestaltung der Erfindung sieht vor, dass als Betriebsart eine Segelbetriebsart verwendet wird. In der Segelbetriebsart wird die Antriebseinrichtung nicht zum Antreiben des Kraftfahrzeugs verwendet beziehungsweise benötigt. Dies kann beispielsweise der Fall sein, wenn äußere Einflüsse, beispielsweise ein Schwerkrafteinfluss, ausreichend ist, um die gewünschte Fahrgeschwindigkeit des Kraftfahrzeugs sicherzustellen. Dies ist insbesondere der Fall, wenn eine Neigung des Untergrunds, auf welchem das Kraftfahrzeug angeordnet ist, eine bestimmte Neigung überschreitet, wobei das Kraftfahrzeug in Fahrtrichtung abschüssig und mithin bergabwärts ausgerichtet ist. In der Segelbetriebsart wird die automatische Kupplung derart angesteuert, dass sie nachfolgend geöffnet, insbesondere vollständig geöffnet, vorliegt. Weiterhin kann die Antriebseinrichtung abgeschaltet werden oder zumindest in eine Leerlaufbetriebsart versetzt werden, in welcher sie beispielsweise lediglich mit einer Leerlaufdrehzahl betrieben wird.

Eine weitere bevorzugte Ausführungsform der Erfindung sieht vor, dass bei einem Einleiten der Betriebsart die Kupplung geöffnet wird. Dies ist insbesondere der Fall, wenn als Betriebsart die Segelbetriebsart verwendet wird. Das bedeutet, dass die Segelbetriebsart beispielsweise von einem Steuergerät des Kraftfahrzeugs eingeleitet wird, wobei gleichzeitig oder zumindest unmittelbar nach dem Einleiten der Betriebsart die Kupplung geöffnet, insbesondere vollständig geöffnet, wird.

Schließlich kann vorgesehen sein, dass zum Erkennen das Betätigen des Schaltgetriebes ein Neutralgangsensor oder ein Allgangsensor verwendet wird. Ein derartiger Sensor ist vorzugsweise ohnehin vorhanden, wenn die Getriebeeinrichtung - wie dies hier der Fall ist - die automatische Kupplung und das manuelle Schaltgetriebe aufweist. Der Neutralgangsensor erkennt insbesondere, wenn das Schaltgetriebe beziehungsweise der Schalthebel in einem Neutralgang beziehungsweise Leerlaufgang angeordnet ist. Der Allgangsensor dagegen erkennt das Ein- und/oder Auslegen von spezifischen Fahrgängen.

Während also mit dem Neutralgangsensor lediglich ganz allgemein festgestellt werden kann, dass ein Fahrgang ausgelegt oder eingelegt wird, kann der Allgangsensor zusätzlich die Informationen liefern, für welchen Fahrgang dies erfolgt. Vorzugsweise sind sowohl der Neutralgangsensor als auch der Allgangsensor derart ausgestaltet, dass sie das Einlegen oder Auslegen bereits zu Beginn erkennen, wobei zu diesem Zeitpunkt der Fahrgang noch nicht tatsächlich ausgelegt beziehungsweise eingelegt ist. Der Neutralgangsensor beziehungsweise der Allgangsensor ist also derart angeordnet beziehungsweise ausgestaltet, dass er rechtzeitig auf das Betätigen des Schaltgetriebes erkennt, sodass durch das Schließen der Kupplung das tatsächliche Auslegen des Fahrgangs oder zumindest das tatsächliche Einlegen des Fahrgangs verhindert werden kann.

Die Erfindung betrifft weiterhin eine Getriebeeinrichtung für ein Kraftfahrzeug, insbesondere zur Durchführung des Verfahrens gemäß den vorstehenden Ausführungen, wobei die Getriebeeinrichtung eine automatische Kupplung und ein manuelles Schaltgetriebe aufweist. Dabei ist vorgesehen, dass die Getriebeeinrichtung dazu ausgebildet ist, in zumindest einer Betriebsart der Getriebeeinrichtung die Kupplung vor einem Einlegen oder Auslegen eines Fahrgangs zu schließen und nach dem Schließen nach einer bestimmten Zeitspanne wieder zu öffnen, wenn bei wenigstens teilweise geöffneter Kupplung auf ein Betätigen des Schaltgetriebes erkannt wird, sodass das Einlegen oder Auslegen des Fahrgangs verhindert wird. Auf die Vorteile einer derartigen Vorgehensweise beziehungsweise einer derartigen Ausgestaltung der Getriebeeinrichtung wurde bereits hingewiesen. Sowohl das Verfahren als auch die Getriebeeinrichtung können gemäß den vorstehenden Ausführungen weitergebildet sein, sodass insoweit auf diese verwiesen wird.

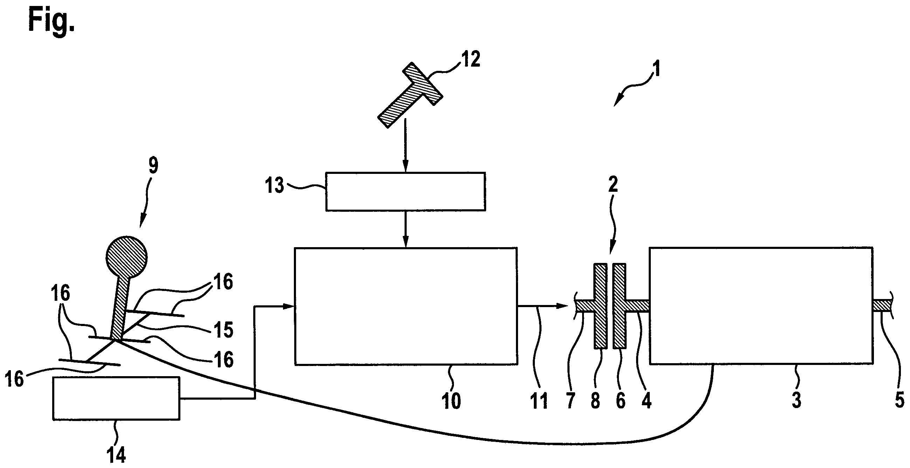

Die Erfindung wird nachfolgend anhand der Zeichnung dargestellten Ausführungsbeispiele näher erläutert, ohne dass eine Beschränkung der Erfindung erfolgt. Dabei zeigt die einzige
- Figur: eine schematische Darstellung einer Getriebeeinrichtung für ein Kraftfahrzeug.

Die Figur zeigt eine schematische Darstellung einer Getriebeeinrichtung 1, wie sie beispielsweise für ein Kraftfahrzeug eingesetzt wird. In diesem Fall ist die Getriebeeinrichtung 1 vorzugsweise in einer Wirkverbindung zwischen einer Antriebseinrichtung mit wenigstens einem Antriebsaggregat sowie wenigstens einer angetriebenen Achse des Kraftfahrzeugs vorgesehen. Die Getriebeeinrichtung 1 weist eine automatische Kupplung 2 sowie ein manuelles Schaltgetriebe 3 auf. Das Schaltgetriebe 3 verfügt über eine Eingangswelle 4 sowie eine Ausgangswelle 5. An dem Schaltgetriebe 3 kann ein Fahrgang eingestellt werden, welcher aus einer Vielzahl von Fahrgängen, beispielsweise mehreren Vorwärtsgängen sowie einem Rückwärtsgang, ausgewählt wird. Der Fahrgang entspricht einer Übersetzung zwischen der Eingangswelle 4 und der Ausgangswelle 5.

Die Eingangswelle 4 des Schaltgetriebes 3 ist mit der Kupplung 2 unmittelbar und starr wirkverbunden, insbesondere mit einer Kupplungsscheibe 6. Die Ausgangswelle 5 ist dagegen bevorzugt starr und/oder permanent mit der wenigstens einen angetriebenen Achse des Kraftfahrzeugs und mithin mit Rädern des Kraftfahrzeugs wirkverbunden. Das bedeutet, dass die Ausgangswelle 5 eine Drehzahl aufweist, welche mit einer Fahrgeschwindigkeit des Kraftfahrzeugs korrespondiert. Die Drehzahl der Eingangswelle 4 und mithin der Kupplungsscheibe 6 kann insoweit aus der Drehzahl der Ausgangswelle 5 sowie der an dem Schaltgetriebe 3 eingestellten Übersetzung beziehungsweise dem entsprechenden Fahrgang ermittelt werden. Selbstverständlich kann das Schaltgetriebe 3 auch in einer Neutralstellung beziehungsweise Leerlaufstellung vor, in welcher die Wirkverbindung zwischen der Eingangswelle 4 und der Ausgangswelle 5 unterbrochen ist.

Auf ihrer dem Schaltgetriebe 3 abgewandten Seite ist die Kupplung 2 über eine Antriebswelle 7 mit der Antriebseinrichtung wirkverbunden beziehungsweise wirkverbindbar. Die Antriebswelle 7 ist mit einer zweiten Kupplungsscheibe 8 der Kupplung 2 verbunden. Durch entsprechendes Anordnen der Kupplungsscheiben 6 und 8 zueinander kann mithin eine Drehmomentübertragungsverbindung zwischen der Antriebswelle 7 und der Eingangswelle 4 des Schaltgetriebes 3 hergestellt werden. Bei vollständig geöffneter Kupplung 2 wird kein Drehmoment zwischen der Antriebswelle 7 und der Eingangswelle 4 übertragen, bei vollständig geschlossener Kupplung 2 dagegen das gesamte Drehmoment. Selbstverständlich sind auch beliebige Zwischenstellungen der Kupplung 2 realisierbar, in welchen das Drehmoment lediglich teilweise übertragen wird. Die Kupplung 2 ist dabei lediglich teilweise geöffnet.

Eine Ansteuerung beziehungsweise Betätigung des Schaltgetriebes 3 kann mithilfe eines Bedienelements 9, beispielsweise eines Schalthebels, erfolgen. Das Bedienelement 9 ist vorzugsweise derart angeordnet, dass es durch einen Fahrer des Kraftfahrzeugs betätigbar ist. Die Kupplung 2 dagegen wird mithilfe eines Steuergeräts 10 angesteuert. Diese Ansteuerung ist hier schematisch durch den Pfeil 11 angedeutet. Ein Ansteuern der Kupplung 2 soll beispielsweise in Abhängigkeit von einer Stellung eines Kupplungspedals 12 oder eines äquivalenten Bedienelements erfolgen. Zu diesem Zweck ist dem Kupplungspedal 12 ein Kupplungspedalsensor 13 zugeordnet, welcher die Stellung des Kupplungspedals 12 ermittelt und als Eingangsgröße dem Steuergerät 10 zuführt.

Dem Bedienelement 9, also beispielsweise dem Schalthebel, ist ein Sensorelement 14 zugeordnet. Dieses ist beispielsweise als Neutralgangsensor oder als Allgangsensor ausgeführt. Mithilfe des Neutralgangsensors kann festgestellt werden, ob das Bedienelement 9 sich in einer hier lediglich angedeuteten Neutralschaltgasse 15 des Bedienelements 9 befindet beziehungsweise ob das Bedienelement 9 in Richtung der Neutralschaltgasse 15 oder aus dieser herausverlagert wird. Der Allgangsensor kann zudem feststellen, welche Schaltstellung des Bedienelements 9 vorliegt beziehungsweise aus welcher Schaltstellung das Bedienelement 9 heraus- oder in welche es hineinverlagert wird. Rein beispielhaft sind Schaltstellungen 16 angedeutet. Selbstverständlich kann grundsätzlich eine beliebige Anzahl von Schaltstellungen 16 vorliegen, wobei jede der Schaltstellungen einem Fahrgang des Schaltgetriebes 3 und somit einer Übersetzung entspricht. Mithilfe des Sensorelements 14 kann zusammenfassend festgestellt werden, ob ein Betätigen des Schaltgetriebes 3 erfolgt beziehungsweise kann auf ein derartiges Betätigen erkannt werden.

Während eines Betriebs der Getriebeeinrichtung 1 ist es nun vorgesehen, dass in zumindest einer Betriebsart der Getriebeeinrichtung 1 die Kupplung 2 vor dem Einlegen eines Fahrgangs an dem Schaltgetriebe 3 geschlossen wird, wenn bei wenigstens teilweise geöffneter Kupplung 2 auf ein Betätigen des Schaltgetriebes 3 erkannt wird. Auf diese Art und Weise wird ein Einlegen eines Fahrgangs und/oder bereits das Auslegen des Fahrgangs verhindert oder zumindest erschwert, wenn ein Gangwechsel möglicherweise zu Problemen führen könnte. Diese könnten sich daraus ergeben, dass ein Fahrgang eingelegt werden soll, welcher eine Übersetzung aufweist, die größer als eine Maximalübersetzung ist. Wie bereits eingangs erläutert, richtet sich die Drehzahl der Eingangswelle nach der Drehzahl der Ausgangswelle 5 und der vorliegenden Übersetzung beziehungsweise dem vorliegenden Übersetzungsverhältnis. Ist dieses zu groß, ist die Drehzahl der Eingangswelle 4 sehr viel größer als die der Ausgangswelle 5. Entsprechend kann es bei großer Drehzahl der Ausgangswelle 5 zu einer Überschreitung der maximal an der Eingangswelle 4 zulässigen Maximaleingangswellendrehzahl und entsprechend unter Umständen zu einer Beschädigung der Getriebeeinrichtung 1, insbesondere der Kupplungsscheibe 6, kommen.

Durch das rechtzeitige Schließen der Kupplung 2, welches lediglich teilweise oder vorzugsweise vollständig erfolgt, kann das Auslegen oder Einlegen des Fahrgangs verhindert oder zumindest dem Fahrer des Kraftfahrzeugs angedeutet werden. Letzteres ist der Fall, weil bei geschlossener Kupplung 2 das Auslegen und Einlegen eines Fahrgangs häufig zu Geräuschen des Schaltgetriebes 3 führt. Die beschriebene Vorgehensweise wird insbesondere angewandt, wenn als Betriebsart eine Segelbetriebsart herangezogen wird, in welcher ein Segelbetrieb des Kraftfahrzeugs vorliegen soll. In diesem ist die Kupplung 2 vorzugsweise zumindest zeitweise vollständig geöffnet, um einem Vortrieb des Kraftfahrzeugs auf anderem Wege als mithilfe der Antriebseinrichtung nicht im Wege zu stehen.

### BEZUGSZEICHENLISTE

- 1: Getriebeeinrichtung
- 2: Kupplung
- 3: Schaltgetriebe
- 4: Eingangswelle
- 5: Ausgangswelle
- 6: Kupplungsscheibe
- 7: Antriebswelle
- 8: Kupplungsscheibe
- 9: Bedienelement
- 10: Steuergerät
- 11: Pfeil
- 12: Kupplungspedal
- 13: Kupplungspedalsensor
- 14: Sensorelement
- 15: Neutralschaltgasse
- 16: Schaltstellung

## Patentansprüche

1. Verfahren zum Betreiben einer Getriebeeinrichtung (1) für ein Kraftfahrzeug, wobei die Getriebeeinrichtung (1) eine automatische Kupplung (2) und ein manuelles Schaltgetriebe (3) aufweist, **dadurch gekennzeichnet, dass** in zumindest einer Betriebsart der Getriebeeinrichtung (1) die Kupplung (2) vor einem Einlegen oder Auslegen eines Fahrgangs an dem Schaltgetriebe (3) geschlossen und nach dem Schließen nach einer bestimmten Zeitspanne wieder geöffnet Wird, wenn bei wenigstens teilweise geöffneter Kupplung (2) auf ein Betätigen des Schaltgetriebes (3) erkannt wird, sodass das Einlegen oder Auslegen des Fahrgangs verhindert wird.

2. Verfahren nach Anspruch 1, **dadurch gekennzeichnet, dass** das Betätigen ein Auslegen oder Einlegen eines Fahrgangs des Schaltgetriebes (3) ist.

3. Verfahren nach einem der vorhergehenden Ansprüche, **dadurch gekennzeichnet, dass** die Kupplung (2) nur dann geschlossen wird, wenn auf das Einlegen eines Fahrgangs erkannt wird, der eine Übersetzung aufweist, die größer ist als eine Maximalübersetzung.

4. Verfahren nach einem der vorhergehenden Ansprüche, **dadurch gekennzeichnet, dass** die Maximalübersetzung aus einer Ausgangswellendrehzahl und einer Maximaleingangswellendrehzahl des Schaltgetriebes (3) bestimmt wird.

5. Verfahren nach einem der vorhergehenden Ansprüche, **dadurch gekennzeichnet, dass** das Schließen der Kupplung (2) nur durchgeführt wird, wenn die Ausgangswellendrehzahl größer als eine Grenzdrehzahl ist.

6. Verfahren nach einem der vorhergehenden Ansprüche, **dadurch gekennzeichnet, dass** als Betriebsart eine Segelbetriebsart verwendet wird.

7. Verfahren nach einem der vorhergehenden Ansprüche, **dadurch gekennzeichnet, dass** bei einem Einleiten der Betriebsart die Kupplung (2) geöffnet wird.

8. Verfahren nach einem der vorhergehenden Ansprüche, **dadurch gekennzeichnet, dass** zum Erkennen des Betätigens des Schaltgetriebes (3) ein Neutralgangsensor oder ein Allgangsensor verwendet wird.

9. Getriebeeinrichtung (1) für ein Kraftfahrzeug, insbesondere zur Durchführung des Verfahrens nach einem oder mehreren der vorhergehenden Ansprüche, die eine automatische Kupplung (2) und ein manuelles Schaltgetriebe (3) aufweist, **dadurch gekennzeichnet, dass** die Getriebeeinrichtung (1) dazu ausgebildet ist, in zumindest einer Betriebsart der Getriebeeinrichtung (1) die Kupplung (2) vor einem Einlegen oder Auslegen eines Fahrgangs zu schließen und nach dem Schließen nach einer bestimmten Zeitspanne wieder zu öffnen, wenn bei wenigstens teilweise geöffneter Kupplung (2) auf ein Betätigen des Schaltgetriebes (3) erkannt wird, sodass das Einlegen oder Auslegen des Fahrgangs verhindert wird.

## Claims

1. Method for operating a transmission device (1) for a motor vehicle, wherein the transmission device (1) has an automatic clutch (2) and a manual transmission (3) **characterised in that** the clutch (2) is closed in at least one mode of operation of the transmission device (1) before an engagement or disengagement of a driving gear in the manual transmission (3) and after the closing is reopened after a designated period of time, if when the clutch (2) is at least partially opened an actuation of the manual transmission (3) is identified, so that the engagement or disengagement of the driving gear is prevented.

2. Method according to claim 1, **characterised in that** the actuation is a disengagement or engagement of a driving gear of the manual transmission (3).

3. Method according to any one of the preceding claims, **characterised in that** the clutch (2) is only closed when the engagement of a driving gear is identified, that has a transmission ratio that is greater than a maximum transmission ratio.

4. Method according to any one of the preceding claims, **characterised in that** the maximum transmission ratio is determined from an output shaft rotational speed and a maximum input shaft rotational speed of the manual transmission (3).

5. Method according to any one of the preceding claims, **characterised in that** the closing of the clutch (2) is only carried out if the output shaft rotational speed is greater than a rotational speed limit.

6. Method according to any one of the preceding claims, **characterised in that** a coasting mode of operation is used as the mode of operation.

7. Method according to any one of the preceding claims, **characterised in that** the clutch (2) is opened when initiating the mode of operation.

8. Method according to any one of the preceding claims, **characterised in that** a neutral gear sensor or all-gear sensor is used for identifying the actuation of the manual transmission (3).

9. Transmission device (1) for a motor vehicle, in particular, for implementation of the method according to one or several of the preceding claims, that has an automatic clutch (2) and a manual transmission (3), **characterised in that** the transmission device (1) is designed to close the clutch (2) in at least one mode of operation of the transmission device (1) before an engagement or disengagement of a driving gear and after the closing to reopen it after a designated period of time, if when the clutch (2) is at least partially opened an actuation of the manual transmission (3) is identified, so that the engagement or disengagement of the driving gear is prevented.

## Revendications

1. Procédé pour faire fonctionner un dispositif de transmission (1) destiné à un véhicule automobile, dans lequel le dispositif de transmission (1) présente un embrayage automatique (2) et une boîte de vitesses manuelle (3), **caractérisé en ce que** dans au moins un mode de fonctionnement du dispositif de transmission (1) l'embrayage (2) est fermé avant un enclenchement ou un désenclenchement d'une vitesse au niveau de la boîte de vitesses (3) et est de nouveau ouvert après la fermeture après un intervalle déterminé si on détecte un actionnement de la boîte de vitesses (3) lorsque l'embrayage (2) est au moins partiellement ouvert de sorte que l'enclenchement ou le désenclenchement de la vitesse soit empêché.

2. Procédé selon la revendication 1, **caractérisé en ce que** l'actionnement est un désenclenchement ou un enclenchement d'une vitesse de la boîte de vitesses (3).

3. Procédé selon l'une quelconque des revendications précédentes, **caractérisé en ce que** l'embrayage (2) est fermé uniquement si on détecte l'enclenchement d'une vitesse qui présente un rapport qui est supérieur à un rapport maximal.

4. Procédé selon l'une quelconque des revendications précédentes, **caractérisé en ce que** le rapport maximal est déterminé à partir d'une vitesse de rotation de l'arbre de désenclenchement et d'une vitesse de rotation de l'arbre d'entrée maximale de la boîte de vitesses (3).

5. Procédé selon l'une quelconque des revendications précédentes, **caractérisé en ce que** la fermeture de l'embrayage (2) n'est réalisée que si la vitesse de rotation de l'arbre de désenclenchement est supérieure à une vitesse de rotation limite.

6. Procédé selon l'une quelconque des revendications précédentes, **caractérisé en ce que** comme mode de fonctionnement un mode de fonctionnement de voile est utilisé.

7. Procédé selon l'une quelconque des revendications précédentes, **caractérisé en ce qu'**en cas d'initiation du mode de fonctionnement l'embrayage (2) est ouvert.

8. Procédé selon l'une quelconque des revendications précédentes, **caractérisé en ce que** pour la détection de l'actionnement de la boîte de vitesses (3) un capteur de vitesse neutre ou un capteur de toutes les vitesses est utilisé.

9. Dispositif de transmission (1) pour un véhicule automobile, en particulier pour la réalisation du procédé selon l'une ou plusieurs quelconques des revendications précédentes, qui présente un embrayage automatique (2) et une boîte de vitesses manuelle (3), **caractérisé en ce que** le dispositif de transmission (1) est réalisé afin de fermer dans au moins un mode de fonctionnement du dispositif de transmission (1) l'embrayage (2) avant un enclenchement ou un désenclenchement d'une vitesse et de l'ouvrir à nouveau après la fermeture après un intervalle déterminé si on détecte un actionnement de la boîte de vitesses (3) lorsque l'embrayage (2) est au moins partiellement ouvert de sorte que l'enclenchement ou le désenclenchement de la vitesse soit empêché.
